# EUROPEAN PATENT SPECIFICATION

(11) **EP 4 411 323 B1**
(45) Date of publication and mention of the grant of the patent: **01.07.2026**
(21) Application number: 23382085.1
(22) Date of filing: 01.02.2023
(51) Int. Cl.: G01D 5/353

(54) **HYDROGEN FUEL TANK WITH A NETWORK OF OPTICAL FIBER SENSORS AND METHOD FOR MONITORING THE STRUCTURAL HEALTH OF A COMPOSITE CRYOGENIC LIQUID HYDROGEN FUEL TANK**
WASSERSTOFF-KRAFTSTOFFTANK MIT EINEM NETZWERK AUS FASEROPTISCHEN SENSOREN UND VERFAHREN ZUR ÜBERWACHUNG DER STRUKTURELLEN INTEGRITÄT EINES ZUSAMMENGESETZTEN KRYOGENEN FLÜSSIGWASSERSTOFF-KRAFTSTOFFTANKS
RÉSERVOIR DE CARBURANT À HYDROGÈNE AVEC UN RÉSEAU DE CAPTEURS À FIBRE OPTIQUE ET PROCÉDÉ DE SURVEILLANCE DE L'ÉTAT STRUCTUREL D'UN RÉSERVOIR DE CARBURANT D'HYDROGÈNE LIQUIDE CRYOGÉNIQUE COMPOSITE

(43) Date of publication of application: 07.08.2024
(73) Proprietor: Airbus Operations, S.L.U., 28906 Getafe (Madrid) (ES)
(72) Inventor: De Miguel Giraldo, Carlos, Getafe (ES)
(74) Representative: Elzaburu S.L.P.

(56) References cited:
- WO-A1-2022/231785
- US-A1- 2004 046 109
- US-A1- 2010 229 662
- GRAUE R ET AL: "INTEGRATED HEALTH MONITORING APPROACH FOR REUSABLE CRYOGENIC TANK STRUCTURES", JOURNAL OF SPACECRAFT AND ROCKETS, AMERICAN INSTITUTE OF AERONAUTICS AND ASTRONAUTICS,REASTON,VA, US, vol. 37, no. 5, 1 September 2000 (2000-09-01), pages 580 - 585, XP000967646, ISSN: 0022-4650

## Description

### Field of the invention

The invention refers to a hydrogen fuel tank comprising a network of optical fiber sensors and a method for monitoring the structural health of a composite cryogenic liquid hydrogen fuel tank, especially in aircraft applications, that uses such network of optical fiber sensors. It is also applicable to the safety of many other components of the hydrogen distribution, such as pipes, pumps or valves inside the aircraft.

### Background of the invention

The aircraft industry is answering to the demand of sustainable transports by considering hydrogen as the clean fuel for future passenger aircraft.

As a fuel, H2 has the benefit of an extremely high specific energy. However, its low specific density counteracts resulting in a relatively low volumetric energy density. To compensate this issue, it is required to storage the H2 in liquid form at low pressure -around 1 bar- but in a deeply cryogenic state -20 K- to minimize storage volume and to avoid H2 boiling point.

Carbon Fibre Reinforced Polymers (CFRP) are one of the expected material families being investigated for use in the fuel tanks to try to improve the relatively high-weight solution of metallic alloys. CFRPs have high strength and stiffness, high toughness, and good chemical resistance. However, due to the frequent extreme cryogenic thermo-mechanical loading cycles on this scenario, two main damage modes can arise in the CFRP tank, the matrix micro-cracking and inter-laminar delaminations. Additionally, the formation of extensive crack networks through the tank wall can also lead to the gradual H2 leaks as a consequence of the increased laminate permeability and the small molecular size of H2. This last aspect is crucial and would impact severely to the safety of the structure, the thermal isolation of the tank (cryo concept of the tank structure comprises inner and outer walls separated by a vacuum core) and last but not least will be economically also rejected because of fuel escape.

In order to mitigate the permeation issue, the use of CFRP materials for H2 tanks can only be considered if barrier materials to the permeation (liners) are additionally added. These layers should be applied on the outer or inner surface of the inner tank, but it is true that currently it cannot be considered as a complete solution for avoiding H2 permeability due to uniformity issues, application procedures, in-service conditions, etc.

Summarizing, at present the detection in composite components of critical damage accumulation, in the form of micro-cracking and delamination, is a difficult and time consuming task up to extend that due to crack closure or because of thick laminate sections, these types of damage may be undetectable by conventional non-destructive methods such as ultrasound or X-ray scanning techniques.

Micro-cracking and consequent increasing of the laminate permeability is micro and macroscopically manifested by the formation of gas leakage paths and also by the alteration of the mechanical properties of the material.

Besides, the prediction of these damage modes and how to determine their influence on the structural performance of the components and material properties like permeability remains today as an outstanding issue to be solved.

US 2010/229662 A1 discloses an instrumentation and monitoring system for a cryogenic material transfer system that incorporates a pipe-in-pipe configuration with either a vacuum or a nanoporous or microporous insulating layer filling the annulus between the inner and outer pipe. The insulating layer is of sufficient flexibility to absorb the expansion or contraction of the inner pipe due to thermal effects from the flow of cryogenic material. The monitoring system typically includes a multitude of fiber optic sensors that measure leaks, temperature, pressure and strain. It includes the fiber optic sensors, conventional sensors, cabling, connectors/splice assembles, ingress/egress methods, ruggedization methods, data acquisition and analysis.

US 2004/046109 A1 discloses a method of sampling M sensors in a fiber optic detector array, by determining a maximum sampling rate possible, and assigning priority to each sensor. Thereafter, available sampling spots are divided into discrete blocks and the sensor of highest priority is assigned sampling slot(s). The remaining sensors are placed in the remaining sampling slots in order of priority, and if a sampling slot is taken, the remaining sensors are placed in the next closest slot. The invention also provides 1D and 2D digital and spatial wavelength domain systems including a plurality of fiber Bragg gratings (FBGs). The FBGs may be illuminated by a plurality of broad band light sources, and coupled thereto by 2x2 couplers. The systems may include a 1D or 2D wavelength dispersion device, and 1D or 2D optically sensitive solid state means for spatially separating the signals at each wavelength reflected by the FBGs.

WO 2022/231785 A1 discloses optical and electrical Sensory Non-metallics Enhanced Reliability via Embedded Sensors (optical and electrical sensory NERVES). It relates to pipeline management and monitoring and more particularly, relates to a control and monitoring system that includes pipes that have integral optical and electrical sensory nerves to define a network of distributed sensors for process control (e.g., fluid connections). It discloses a smart pipe segment for use in construction of a pipeline that includes a pipe body and a sensing nerve network that is associated with the pipe body and is configured to monitor a condition of the pipe segment in real-time. The sensing nerve network comprises optical nerves, electrical nerves or a combination thereof.

GRAUE R ET AL: "INTEGRATED HEALTH MONITORING APPROACH FOR REUSABLE CRYOGENIC TANK STRUCTURES", JOURNAL OF SPACECRAFT AND ROCKETS, AMERICAN INSTITUTE OF AERONAUTICS AND ASTRONAUTICS,REASTON,VA, US, vol. 37, no. 5, September 2000 (2000-09-01), pages 580 - 585, XP000967646, ISSN: 0022-4650, discloses health monitoring systems for space transportation systems with sensor and diagnosis technologies, in particular for large reusable cryogenic tank structures. Special emphasis is given to onboard sensors such as fiber optic sensors and acoustic emission sensors, as well as nondestructive inspection techniques such as infrared thermography and laser shearography.

### Summary of the invention

The object of the invention is to provide a hydrogen fuel tank comprising a network of optical fiber sensors and a method for monitoring the structural health of a composite cryogenic liquid hydrogen fuel tank that allows the indirect detection of the micro-cracks network in in-service conditions in a simple way, in order to control the structural integrity of the tank.

The invention provides a hydrogen fuel tank comprising a network of optical fiber sensors with strain sensors, temperature sensors and H2 sensors, wherein the hydrogen fuel tank is a composite cryogenic liquid hydrogen fuel tank of the type comprising an inner tank, an outer tank and an intermediate chamber between the inner tank and the outer tank, wherein the optical fiber sensors are connected forming a network and are placed in the inner tank, in the intermediate chamber and in the outer tank, and are configured to be able to continuously and simultaneously measure these physical variables: temperatures, strains and pressures or to detect H2, by converting modified light properties into the corresponding physical variable.

The invention also provides a method for monitoring the structural health of a composite cryogenic liquid hydrogen fuel tank, that comprises the following steps:
a) determination of the permeability curves k=f(t) for a material configuration as a function of service conditions, and determination of the critical k value for the material configuration, after preliminary tests that comprise:
   - select a material configuration for a test sample of the tank,
   - prior verification by non-destructive testing that the sample does not present porosity, delaminations, excess resin or any other defect affecting its mechanical properties,
   - mechanical characterization tests to determine the modulus of elasticity and mechanical strength under initial conditions without exposure of the material to gases,
   - integration of a network of optical fiber sensors of the invention in the sample,
   - submitting the sample to test conditions that are representative of the actual application in terms of stiffness and mechanical pressure cycles,
   - installation of a vacuum pump outside the tank and H2 detecting system, so that there are two separate pressure and concentration zones: H2 at a given pressure and vacuum required to maintain thermal stability in the tank,
   - realization of cryogenic temperature cycles,
   - the fiber optic sensors monitor the evolution of strain and temperature in the sample during tests,
   - after several test cycles the sample is disassembled and mechanically tested to evaluate the decrease in mechanical properties,
   - determination of the permeability curves k=f(t) for the tested material configuration as a function of service conditions, and
   - determination of the critical k value for the tested material configuration.
b) real in-service test for a tank with a specific material configuration:
   - continuous measurement of the following parameters by optical fiber sensors integrated in the network:
      - distribution of temperatures inside the inner tank,
      - distribution of temperatures inside the intermediate chamber,
      - distribution of temperatures on the outer tank,
      - strain in several locations of the tank, and
      - pressure inside the tank and inside the intermediate chamber,
   - analysis of the evolution and correlations of the measured parameters along in-service time; and
   - determination of the threshold level of micro-cracks and estimation of the permeability status of the tank, comparing k with the critical k value, in order to take a decision about maintenance or repair of the tank.

The network of optical fiber sensors monitoring all the parameters simultaneously enables the study correlation and analysis of the physical events taking place in the tank over the timelife.

The combination of the analysis of the simultaneous parameters increases the sensitivity of the microcrack diagnosis, facilitates the redundancy of the measurements and minimises the presence of those false alarms produced by magnitude changes in some parameters of the same order as measurement uncertainties.

Other characteristics and advantages of the present invention will be clear from the following detailed description of several embodiments illustrative of its object in relation to the attached figures.

### Brief description of drawings

Figure 1 shows a hydrogen fuel tank with a network of optical fiber sensors of the invention.
Figure 2 shows a platform that receives multiple channels, each channel corresponding to a sensor type.
Figure 3 is a graph showing different permeability curves as a function of in-service conditions, and the point of critical permeability.
Figure 4 is a flow chart describing the in-service steps of the method of the invention.

### Detailed description of the invention

The network of optical fiber sensors of the invention is suitable to be installed in a hydrogen fuel tank 1, and the optical fiber sensors are connected forming a network with strain sensors 11, temperature sensors 12 and H2 sensors 15, configured to be able to continuously and simultaneously measure these physical variables: temperatures, strains and pressures or to detect H2, by converting modified light properties into the corresponding physical variable.

In another embodiment the network comprises additional optical fiber sensors (acceleration sensors 13) configured to be able to continuously and simultaneously measure acceleration.

In another embodiment the network comprises additional optical fiber sensors (O2 sensors 14) configured to detect O2.

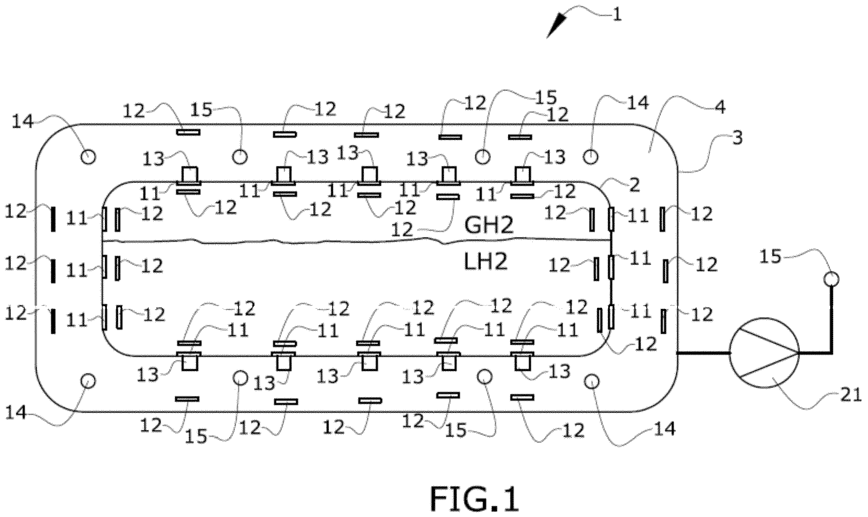

One example of a network of optical fiber sensors of the invention can be seen in figure 1, which shows a hydrogen fuel tank 1 instrumented with a network of optical fiber sensors (OFS), in which there are strain sensors 11, temperature sensors 12, acceleration sensors 13, O2 sensors 14 and H2 sensors 15. These sensors are configured to be able to continuously and simultaneously measure these physical variables: temperatures, strains, pressures and accelerations) or to detect O2 and H2, by converting modified light properties into the corresponding physical variable.

According to the invention, the hydrogen fuel tank 1 is a composite cryogenic liquid hydrogen fuel tank of the type comprising an inner tank 2, an outer tank 3 and an intermediate chamber 4 between the inner tank 2 and the outer tank 3. In this embodiment the optical fiber sensors are placed in the inner tank 2, in the intermediate chamber 4 and in the outer tank 3.

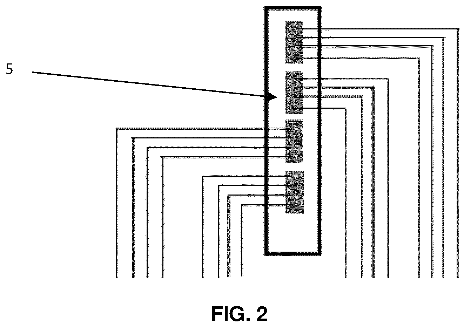

Figure 2 shows a platform 5 that receives multiple channels working in parallel. Each channel corresponds to a sensor type (e.g. one channel for temperature sensors 12, another channel for strain sensors 11, etc.). In this way the sensors can be managed by the platform 5, acting as a multifunctional optical fiber sensors platform that comprises an array of optical channels wherein the modified light properties, such as wavelength, are properly converted into physical measurements, like temperature, strain, load, acceleration or pressure, or gas detection.

The optical fiber sensors can be of many kinds, for instance, luminescent optical fiber sensors, fiber Bragg grating sensors or backscattering sensors.

The main factors affecting the onset, growth and density of micro-cracking of cryogenic composite tanks can be classified into the main groups:
a) On the one hand, those factors related to the material such as the individual ply thickness, thickness laminate, lay-up, material properties (fiber and matrix) and presence of manufacturing defects such as voids, porosity or rich resin areas.
b) On the other hand, external factors such as the load, pressure or thermal stresses related to the cooling/warming rate and the number of fueling/refueling cycles that repeatedly exposed the tanks walls to thermal cycles between -250 °C to room temperature.

The micro-cracking of the material and the application of liner materials as barrier materials against H2 permeation through the inner vessel can be considered two of the most important factors when studying the H2 permeability through the tank. Thus, the first step of this invention is the previous characterization of the selected material configuration of the tank (including liner), by cryogenic cycle tests combined with full experimental investigation by NDT. These tests will enable to estimate a quantitative relationship between the micro-cracking, crack opening displacement & global material permeability decrease along the in-service time and measured by the optical fiber sensors (temperature, strain, pressure and vibration modes). This relationship assists in the prediction of the onset of the critical density of micro-cracking and delaminations length.

| **Variables affecting to the permeability (k)** | **Symbol** | **Dimensional Unit** | **Associated monitoring sensors** |
|---|---|---|---|
| *thickness of the tank* | *th* | *L* | *data* |
| *ply thickness* | *CPT* | *L* | *data* |
| *differential pressure history (pressure and vacuum. RMS)* | *ΔP(t)* | *M.L^{-1.} T*^{-*2*} | *pressure sensors* |
| *viscosity of the gas*/*fluid (H2)* | *η* | *M.L^{-1.} T⁻¹* | *data* |
| *surface area of the tank* | A | *L²* | *data* |
| *temperature history (i.e: RMS)* | *T(t)* | *K* | *temperature sensors* |
| *compactation coeficient (manufacturing defects of the material of the tank, i.e: voids, porosity or rich resin areas)* | *γ* | *adimensional* | *Production NDT* |
| *time (operational time)* | *t* | *T* | *time sensors* |
| *stress state history (i.e: RMS)* | *σ(τ)* | *M.L^{-1.} T⁻²* | *strain sensors* |
| *number of fueling*/*refueling cycles* | *N* | *adimensional* | *temperature sensors* |
| *factor related to H2 volume during fueling*/*refueling operations* | *δ* | *adimensional* | *empirical data* |
| *cooling*/*warming rate factor (operational time)* | ψ\|(τ) | *adimensional* | *temperature sensors* |
| *stiffness variation factor (compare to a pristine state)* | ξ | *adimensional* | *strain sensors* |
| *stiffness variation factor (compare to a pristine state)* | χ | *adimensional* | *modal analysis sensors* |
| *empirical acomodation factor (material, stacking and liners)* | ϕ | *adimensional* | *empirical data* |

The temperature measurements inside the tank are done by temperature sensors 12 that can be fiber Bragg grating sensors (FBG sensors). This type of sensors has demonstrated excellent capability to measure temperature in conventional aerospace temperature ranges (-60 to 300° C) but reduce drastically the temperature sensitivity at H2 cryo temperatures. This invention includes modified fiber Bragg grating sensors able to measure the temperature evolution from room temperature to cryo conditions. The material of the fiber coating, length of the grating and overall, the capsulated process of the sensor are specially done so that the final sensor configuration present enough sensitivity, robustness and stability over the complete temperature range of this application. This temperature will be uniformly distributed over the complete tank monitoring the complete in-service operation. The temperature history, cooling/warming rate and the number of refueling cycles is thereby precisely accounted.

The strain measurement of the tank, related to the internal stresses due to the pressurization state and the thermal cycles conditions, are done by strain sensors 11 that can also be fiber Bragg grating sensors. Again FBG sensors have demonstrated excellent capability to measure strain in conventional aerospace conditions but in cryo conditions the capability of the sensors is enormously impacted due to peak splitting of the spectrum. This phenomenon related to the inevitable transversal stress on the sensors because of the strong temperature gradient (around 300 K) is also corrected by a special design, configuration and integration procedure of the sensor inside the tank. The design consists of introducing the sensing length of the fiber inside a metallic or polymeric capillary so that the transmission of the strain from the substrate to the sensing fiber is purely done by longitudinal stress and not transversal stress. The capillary is precisely chosen in terms of diameter and length respect to the fiber grating so that it will not exist contact between the capillary and fiber in the complete temperature range despite the different thermal contraction of capillary and fiber materials. The adhesive to join the fiber to the material of the tank is only applied on the two edges of the fibers adjacent to the grating and the external surface of the capillary. The edges of the capillary are also cut very carefully by electro erosion process to avoid the release of sharped areas that could cut damage the fiber when working in cyclic stress. All the fiber edges and capillary are finally covered by aluminum tape to minimize the contact of gases with the sensor. Therefore, the final result of this sensor configuration result in a spectrum peak that is unaltered and therefore able to measure the strain when tensile or compressed in similar conditions to room temperature.

Since the micro cracking also leads to a multidirectional reduction in stiffness of the whole laminate, the monitoring and control of the evolution of the strain in multi-directions together with the measurement of the temperature and pressure inside the tank will support of the determination of an empirical factor related to the prediction of the level of micro cracks inside the material. The use of distributed FBG sensors in a unique optical fiber will enable detecting the stiffness changes due to the microcracking when comparing different locations and direction of the tank with respect to a pristine status.

The permeation of H2 through the thickness of the tank wall, and subsequent expansion within the intermediate chamber 4 will be also double detected by:
a) FBG optical fiber differential pressure that is integrated inside the tank and inside the volume between inner and outer vessels, where the insulation/vacuum takes place. These sensors are installed in an elastic membrane that is linearly deflected when differential pressure changes. The geometry and mechanical properties of the material of the membranes are carefully selected in function of the differential pressure changes to be measured. The temperature effect is compensated by the temperature sensors previously described.
b) H2 leak sensors located in the volume of the intermediate chamber 4 and also based on FBG sensors. The sensors have sensitivity to the H2 concentration and therefore make a warming when the gas concentration is higher than an established critical value.
c) Additionally, the temperature sensors 12 inside the volume of the intermediate chamber 4 and on the outer tank also based on FBG sensors will assist to the leak detection by the gradual and progressive detection of the lower temperatures in the intermediate chamber 4 and outer tank surface since the H2 leaks will affect the temperature in the intermediate chamber 4 and the insulation effectiveness by degrading vacuum. This H2 molecules increase the pressure and also the thermal conductivity of the double walled insulated tank.

The vibration modes of the tank can also be measured by acceleration sensors 13, like modified FBG sensors. The use of multiple optical fiber accelerometers located in different locations of the tank will add accuracy and redundancy to this tool. The fiber optical accelerometers are prepared in a special casing that is in turn fit to the tank so that the vibrations of the structure can be measured. The sensor and casing will be adapted to get maximum sensitivity and resolution for the expected frequency range. These sensors along with an external precise mechanical hammer that include also a synchronized FBG sensor sensitive to the impact to the tank will enable to determine the modal shapes of the LH2 tank. The correlation between the FBG sensors installed on the tanks with the FBG sensor installed on the hammer enable to calculate the modal forms of the tanks. Since the natural frequencies of the tank are in fact function of the rigidity of the tank (and also the mass), these sensors will allow also to measure the variation of the rigidity due to the micro-cracks when compared with a pristine state of the tank. During the operational modal analysis it will be necessary to control the mass of H2 inside the tank since this also influences the modal shapes on the tank. This could be done by other level sensors based on temperature distribution (that could be the same described previously located in the proper configuration or even ultrasound sensors).

O2 detection sensors 14, which can also be based on FBG sensors and located in the intermediate chamber, are installed, since the presence of this gas with H2 leaks is a serious hazard if the mixture reaches the critical explosive limit.

The combination and measurement of the causes-effects by all these optical fiber sensors in correlation with the model previously determined by experimental tests will enable to determine the evolution of the tank and the establishment of in-service critical status of the tank.

The method for monitoring the structural health of a composite cryogenic liquid hydrogen fuel tank 1 of the invention comprises the following steps:
a) determination of the permeability curves k=f(t) for a material configuration as a function of service conditions, and determination of the critical k value for the material configuration,
b) real in-service test for a tank 1 with a specific material configuration:
   - continuous measurement of the following parameters by optical fiber sensors integrated in the network:
      - distribution of temperatures inside the inner tank,
      - distribution of temperatures inside the intermediate chamber,
      - distribution of temperatures on the outer tank,
      - strain in several locations of the tank, and
      - pressure inside the tank and inside the intermediate chamber,
   - analysis of the evolution and correlations of the measured parameters along in-service time; and
   - determination of the threshold level of micro-cracks and estimation of the permeability status of the tank 1, comparing k with the critical k value, in order to take a decision about maintenance or repair of the tank 1.

In step a), the determination of the permeability curves k=f(t) for a material configuration as a function of service conditions, and the determination of the critical k value for the material configuration is done after preliminary tests that comprise:
- select a material configuration for a test sample of the tank 1,
- prior verification by non-destructive testing that the sample does not present porosity, delaminations, excess resin or any other defect affecting its mechanical properties,
- mechanical characterization tests to determine the modulus of elasticity and mechanical strength under initial conditions without exposure of the material to gases,
- integration of a network of optical fiber sensors of claim 1 in the sample,
- submitting the sample to test conditions that are representative of the actual application in terms of stiffness and mechanical pressure cycles,
- installation of a vacuum pump 21 outside the tank and H2 detecting system, so that there are two separate pressure and concentration zones: H2 at a given pressure and vacuum required to maintain thermal stability in the tank 1,
- realization of cryogenic temperature cycles,
- the fiber optic sensors monitor the evolution of strain and temperature in the sample during tests,
- after several test cycles the sample is disassembled and mechanically tested to evaluate the decrease in mechanical properties,
- determination of the permeability curves k=f(t) for the tested material configuration as a function of service conditions,
- determination of the critical k value for the tested material configuration, and
- repetition of the above steps for each material configuration.

In another embodiment of the method, it can additionally comprise the detection of H2 by optical fiber sensors placed inside the intermediate chamber 4 and/or outside the tank 1 and integrated in the network:
In another embodiment of the method, it additionally comprises the detection of O2 by optical fiber sensors placed inside the intermediate chamber 4 and integrated in the network:
In another embodiment of the method, it additionally comprises the continuous measurement of vibration modes by different optical fiber sensor accelerometers at different locations of the tank (1) integrated in the network.

In another embodiment of the method, the sample incorporates a tomography inspection camera to study the evolution of cracks simultaneously.

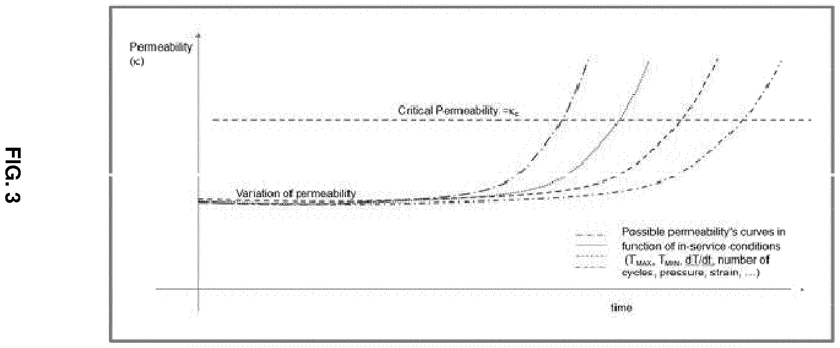

Figure 3 is a graph showing possible permeability curves as a function of in-service conditions (Tmax, Tmin, dT/dt, number of cycles, pressure, strain, etc.). It also shows the point of critical permeability, and its intersection with the permeability curves. These intersections indicate the time to take maintenance actions on the tank 1 (replacement, repair, etc.) for each permeability curve.

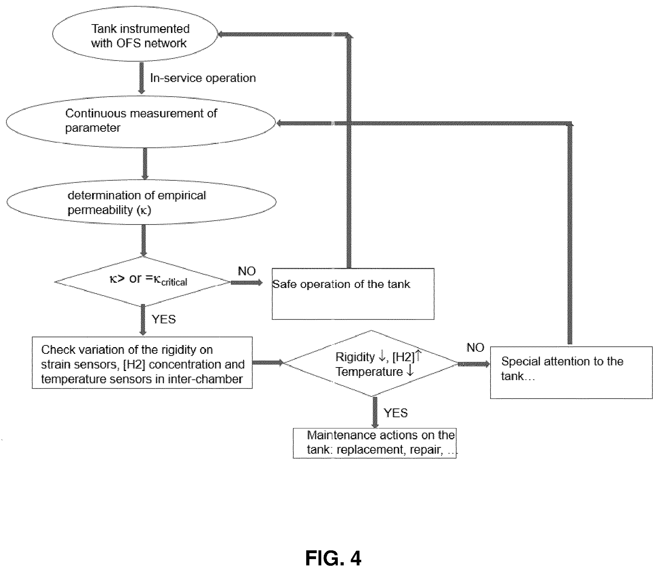

Figure 4 is a flow chart describing the in-service steps of the method of the invention. After the comparison between the permeability k with the critical permeability kc, the variation of the rigidity on strain sensors, the H2 concentration and the temperature of the temperature sensors in the intermediate chamber 4 can be checked, in order to decide to take maintenance actions on the tank, such as its replacement or repair.

Although the present invention has been fully described in connection with preferred embodiments, it is evident that modifications may be introduced within the scope thereof, not considering this as limited by these embodiments, but by the contents of the following claims.

## Claims

1. Hydrogen fuel tank (1) comprising a network of optical fiber sensors with strain sensors (11), temperature sensors (12) and H2 sensors (15), wherein the hydrogen fuel tank (1) is a composite cryogenic liquid hydrogen fuel tank of the type comprising an inner tank (2), an outer tank (3) and an intermediate chamber (4) between the inner tank (2) and the outer tank (3), **characterized in that** the optical fiber sensors are connected forming a network and are placed in the inner tank (2), in the intermediate chamber (4) and in the outer tank (3), and are configured to be able to continuously and simultaneously measure these physical variables: temperatures, strains and pressures or to detect H2, by converting modified light properties into the corresponding physical variable.

2. Hydrogen fuel tank (1) comprising a network of optical fiber sensors, according to claim 1, that comprises additional optical fiber sensors configured to be able to continuously and simultaneously measure acceleration.

3. Hydrogen fuel tank (1) comprising a network of optical fiber sensors, according to any of the previous claims, that comprises additional optical fiber sensors configured to detect O2.

4. Hydrogen fuel tank (1) comprising a network of optical fiber sensors, according to any of the previous claims, wherein the optical fiber sensors are luminescent optical fiber sensors.

5. Hydrogen fuel tank (1) comprising a network of optical fiber sensors, according to any of claims 1 to 3, wherein the optical fiber sensors are fiber Bragg grating sensors.

6. Hydrogen fuel tank (1) comprising a network of optical fiber sensors, according to any of claims 1 to 3, wherein the optical fiber sensors are backscattering sensors.

7. Method for monitoring the structural health of a composite cryogenic liquid hydrogen fuel tank (1) of any of claims 1 to 6, that comprises the following steps:
a) determination of the permeability curves k=f(t) for a material configuration as a function of service conditions, and determination of the critical k value for the material configuration, after preliminary tests that comprise:
- select a material configuration for a test sample of the tank (1),
- prior verification by non-destructive testing that the sample does not present porosity, delaminations, excess resin or any other defect affecting its mechanical properties,
- mechanical characterization tests to determine the modulus of elasticity and mechanical strength under initial conditions without exposure of the material to gases,
- integration of a network of optical fiber sensors of claim 1 in the sample,
- submitting the sample to test conditions that are representative of the actual application in terms of stiffness and mechanical pressure cycles,
- installation of a vacuum pump (21) outside the tank and H2 detecting system, so that there are two separate pressure and concentration zones: H2 at a given pressure and vacuum required to maintain thermal stability in the tank (1),
- realization of cryogenic temperature cycles,
- the fiber optic sensors monitor the evolution of strain and temperature in the sample during tests,
- after several test cycles the sample is disassembled and mechanically tested to evaluate the decrease in mechanical properties,
- determination of the permeability curves k=f(t) for the tested material configuration as a function of service conditions, and
- determination of the critical k value for the tested material configuration.
b) real in-service test for a tank (1) with a specific material configuration:
- continuous measurement of the following parameters by optical fiber sensors integrated in the network:
- distribution of temperatures inside the inner tank,
- distribution of temperatures inside the intermediate chamber,
- distribution of temperatures on the outer tank,
- strain in several locations of the tank, and
- pressure inside the tank and inside the intermediate chamber,
- analysis of the evolution and correlations of the measured parameters along in-service time; and
- determination of the threshold level of micro-cracks and estimation of the permeability status of the tank (1), comparing k with the critical k value, in order to take a decision about maintenance or repair of the tank (1).

8. Method for monitoring the structural health of a composite cryogenic liquid hydrogen fuel tank (1), according to claim 7, that additionally comprises the detection of H2 by optical fiber sensors placed inside the intermediate chamber (4) and/or outside the tank (1) and integrated in the network.

9. Method for monitoring the structural health of a composite cryogenic liquid hydrogen fuel tank (1), according to any of claims 7 or 8, that additionally comprises the detection of O2 by optical fiber sensors placed inside the intermediate chamber (4) and integrated in the network.

10. Method for monitoring the structural health of a composite cryogenic liquid hydrogen fuel tank (1), according to any of claims 7 to 9, that additionally comprises the continuous measurement of vibration modes by different optical fiber sensor accelerometers at different locations of the tank (1) integrated in the network.

11. Method for monitoring the structural health of a composite cryogenic liquid hydrogen fuel tank (1), according to any of claims 7 to 10, wherein the sample incorporates a tomography inspection camera to study the evolution of cracks simultaneously.

## Patentansprüche

1. Wasserstoff-Kraftstofftank (1), umfassend ein Netzwerk von Lichtleitersensoren mit Dehnungssensoren (11), Temperatursensoren (12) und H2-Sensoren (15), wobei der Wasserstoff-Kraftstofftank (1) ein Verbund-Kraftstofftank für kryogenen flüssigen Wasserstoff des Typs ist, der einen Innentank (2), einen Außentank (3) und eine Zwischenkammer (4) zwischen dem Innentank (2) und dem Außentank (3) umfasst, **dadurch gekennzeichnet, dass** die Lichtleitersensoren zu einem Netzwerk verbunden sind und im Innentank (2), in der Zwischenkammer (4) und im Außentank (3) platziert sind und dazu konfiguriert sind, folgende physikalischen Größen kontinuierlich und gleichzeitig messen zu können: Temperaturen, Dehnungen und Drücke, oder H2 zu detektieren, indem sie modifizierte Lichteigenschaften in die entsprechende physikalische Größe umwandeln.

2. Wasserstoff-Kraftstofftank (1), umfassend ein Netzwerk von Lichtleitersensoren, nach Anspruch 1, das zusätzliche Lichtleitersensoren umfasst, die dazu konfiguriert sind, eine Beschleunigung kontinuierlich und gleichzeitig messen zu können.

3. Wasserstoff-Kraftstofftank (1), umfassend ein Netzwerk von Lichtleitersensoren, nach einem der vorhergehenden Ansprüche, das zusätzliche Lichtleitersensoren umfasst, die dazu ausgelegt sind, O2 zu detektieren.

4. Wasserstoff-Kraftstofftank (1), umfassend ein Netzwerk von Lichtleitersensoren, nach einem der vorhergehenden Ansprüche, wobei die Lichtleitersensoren lumineszierende Lichtleitersensoren sind.

5. Wasserstoff-Kraftstofftank (1), umfassend ein Netzwerk von Lichtleitersensoren, nach einem der Ansprüche 1 bis 3, wobei die Lichtleitersensoren Faser-Bragg-Gittersensoren sind.

6. Wasserstoff-Kraftstofftank (1), umfassend ein Netzwerk von Lichtleitersensoren, nach einem der Ansprüche 1 bis 3, wobei die Lichtleitersensoren Rückstreusensoren sind.

7. Verfahren zum Überwachen des Strukturzustands eines Verbund-Kraftstofftanks für kryogenen flüssigen Wasserstoff (1) nach einem der Ansprüche 1 bis 6, umfassend die folgenden Schritte:
a) Bestimmung der Permeabilitätskurven k = f(t) für eine Materialkonfiguration in Abhängigkeit von Einsatzbedingungen und Bestimmung des kritischen k-Werts für die Materialkonfiguration nach Vorprüfungen, die Folgendes umfassen:
- Auswählen einer Materialkonfiguration für ein Prüfmuster des Tanks (1),
- vorherige Verifizierung durch zerstörungsfreie Prüfung, dass das Muster keine Porosität, Delaminationen, überschüssiges Harz oder sonstigen Defekte aufweist, die seine mechanischen Eigenschaften beeinträchtigen,
- mechanische Charakterisierungsprüfungen zum Bestimmen des Elastizitätsmoduls und der mechanischen Festigkeit unter Ausgangsbedingungen, ohne dass das Material Gasen ausgesetzt wird,
- Integration eines Netzwerks von Lichtleitersensoren nach Anspruch 1 in das Muster,
- Exposition des Musters gegenüber Prüfbedingungen, die für die tatsächliche Anwendung in Bezug auf Steifigkeit und mechanische Druckzyklen repräsentativ sind;
- Installation einer Vakuumpumpe (21) außerhalb des Tanks und des H2-Detektionssystems, so dass zwei getrennte Druck- und Konzentrationszonen vorhanden sind: H2 bei einem bestimmten Druck und Vakuum, die erforderlich sind, um die thermische Stabilität in dem Tank (1) aufrechtzuerhalten,
- Realisierung kryogener Temperaturzyklen,
- die faseroptischen Sensoren überwachen die Entwicklung von Dehnung und Temperatur in der Probe während der Prüfungen,
- nach mehreren Prüfzyklen wird die Probe demontiert und mechanisch geprüft, um die Abnahme der mechanischen Eigenschaften zu beurteilen,
- Bestimmung der Permeabilitätskurven k = f(t) für die geprüfte Materialkonfiguration in Abhängigkeit von den Einsatzbedingungen, und
- Bestimmung des kritischen k-Wertes für die geprüfte Materialkonfiguration.
b) Prüfung im realen Einsatz für einen Tank (1) mit einer spezifischen Materialkonfiguration:
- kontinuierliche Messung der folgenden Parameter durch Lichtleitersensoren, die in das Netzwerk integriert sind:
- Verteilung der Temperaturen innerhalb des Innentanks,
- Verteilung der Temperaturen innerhalb der Zwischenkammer,
- Verteilung der Temperaturen an dem Außentank,
- Dehnung an mehreren Stellen des Tanks, und
- Druck innerhalb des Tanks und innerhalb der Zwischenkammer,
- Analyse der Entwicklung und Korrelationen der gemessenen Parameter im Verlauf der Einsatzzeit; und
- Bestimmung des Schwellenwertes von Mikrorissen und Schätzung des Permeabilitätszustands des Tanks (1), Vergleich von k mit dem kritischen k-Wert, um eine Entscheidung über die Wartung oder Reparatur des Tanks (1) zu treffen.

8. Verfahren zum Überwachen des Strukturzustands eines Verbund-Kraftstofftanks für kryogenen flüssigen Wasserstoff (1) nach Anspruch 7, das zusätzlich die Detektion von H2 durch Lichtleitersensoren umfasst, die innerhalb der Zwischenkammer (4) und/oder außerhalb des Tanks (1) platziert und in das Netzwerk integriert sind.

9. Verfahren zum Überwachen des Strukturzustands eines Verbund-Kraftstofftanks für kryogenen flüssigen Wasserstoff (1) nach einem der Ansprüche 7 oder 8, das zusätzlich die Detektion von O2 durch Lichtleitersensoren umfasst, die innerhalb der Zwischenkammer (4) platziert und in das Netzwerk integriert sind.

10. Verfahren zum Überwachen des Strukturzustands eines Verbund-Kraftstofftanks für kryogenen flüssigen Wasserstoff (1) nach einem der Ansprüche 7 bis 9, das zusätzlich die kontinuierliche Messung von Vibrationsmoden durch verschiedene Lichtleitersensor-Beschleunigungsmesser an verschiedenen Stellen des integrierten Tanks (1), die in das Netzwerk integriert sind, umfasst.

11. Verfahren zum Überwachen des Strukturzustands eines Verbund-Kraftstofftanks für kryogenen flüssigen Wasserstoff (1) nach einem der Ansprüche 7 bis 10, wobei die Probe eine Tomographieinspektionskamera beinhaltet, um die Entwicklung von Rissen gleichzeitig zu untersuchen.

## Revendications

1. Réservoir (1) d'hydrogène carburant comprenant un réseau de capteurs à fibres optiques avec des capteurs (11) de déformation, des capteurs (12) de température et des capteurs (15) d'H2, le réservoir (1) d'hydrogène carburant étant un réservoir cryogénique composite d'hydrogène carburant liquide du type comprenant un réservoir interne (2), un réservoir externe (3) et une chambre intermédiaire (4) entre le réservoir interne (2) et le réservoir externe (3), **caractérisé en ce que** les capteurs à fibre optique sont connectés en réseau et sont placés dans le réservoir interne (2), dans la chambre intermédiaire (4) et dans le réservoir externe (3), et sont configurés pour pouvoir mesurer en continu et simultanément ces variables physiques : températures, déformations et pressions ou pour détecter de l'H2 en convertissant des propriétés lumineuses modifiées en la variable physique correspondante.

2. Réservoir (1) d'hydrogène carburant comprenant un réseau de capteurs à fibres optiques selon la revendication 1, qui comprend des capteurs supplémentaires à fibres optiques configurés pour pouvoir mesurer l'accélération en continu et simultanément.

3. Réservoir (1) d'hydrogène carburant comprenant un réseau de capteurs à fibres optiques, selon l'une quelconque des revendications précédentes, qui comprend des capteurs à fibres optiques supplémentaires configurés pour détecter de l'O2.

4. Réservoir (1) d'hydrogène carburant comprenant un réseau de capteurs à fibres optiques, selon l'une quelconque des revendications précédentes, les capteurs à fibres optiques étant des capteurs à fibres optiques luminescents.

5. Réservoir (1) d'hydrogène carburant comprenant un réseau de capteurs à fibre optique, selon l'une quelconque des revendications 1 à 3, les capteurs à fibre optique étant des capteurs à fibre à réseau de Bragg.

6. Réservoir (1) d'hydrogène carburant comprenant un réseau de capteurs à fibres optiques selon l'une quelconque des revendications 1 à 3, les capteurs à fibres optiques étant des capteurs à rétrodiffusion.

7. Procédé de surveillance de l'intégrité structurale d'un réservoir cryogénique composite (1) d'hydrogène carburant liquide selon l'une quelconque des revendications 1 à 6, comportant les étapes suivantes :
a) détermination des courbes de perméabilité k=f(t) pour une configuration de matériau en fonction de conditions de service, et détermination de la valeur critique de k pour la configuration de matériau, après des essais préliminaires comprenant :
- la sélection d'une configuration de matériau pour un échantillon d'essai du réservoir (1),
- le fait de vérifier au préalable par contrôle non destructif que l'échantillon ne présente pas de porosité, de délaminations, d'excès de résine ou de tout autre défaut affectant ses propriétés mécaniques,
- des tests de caractérisation mécanique pour déterminer le module d'élasticité et la résistance mécanique dans des conditions initiales sans exposition du matériau aux gaz,
- l'intégration d'un réseau de capteurs à fibre optique selon la revendication 1 dans l'échantillon,
- le fait de soumettre l'échantillon à des conditions d'essai représentatives de l'application réelle en termes de rigidité et de cycles mécaniques de pression,
- l'installation d'une pompe (21) à vide à l'extérieur du réservoir et d'un système de détection d'H2 de telle sorte qu'il y ait deux zones distinctes de pression et de concentration : H2 à une pression donnée et un vide nécessaires pour maintenir la stabilité thermique dans le réservoir (1),
- la réalisation de cycles de température cryogéniques,
- la surveillance par les capteurs à fibre optique de l'évolution de la déformation et de la température dans l'échantillon pendant les tests,
- après plusieurs cycles d'essais, démontage et essais mécaniques de l'échantillon pour évaluer la diminution des propriétés mécaniques,
- détermination des courbes de perméabilité k=f(t) pour la configuration de matériau testé en fonction des conditions de service, et
- détermination de la valeur critique de k pour la configuration de matériau testée.
b) essai en service réel pour un réservoir (1) doté d'une configuration de matériau spécifique :
- mesure en continu des paramètres suivants par des capteurs à fibre optique intégrés au réseau :
- répartition des températures à l'intérieur du réservoir interne,
- répartition des températures à l'intérieur de la chambre intermédiaire,
- répartition des températures sur le réservoir externe,
- déformation en plusieurs endroits du réservoir, et
- pression à l'intérieur du réservoir et à l'intérieur de la chambre intermédiaire,
- analyse de l'évolution et des corrélations des paramètres mesurés au cours du temps de service ; et
- détermination du niveau seuil de microfissures et estimation de l'état de perméabilité du réservoir (1), comparaison de k à la valeur critique de k, pour prendre une décision concernant la maintenance ou la réparation du réservoir (1).

8. Procédé de surveillance de l'intégrité structurale d'un réservoir cryogénique composite (1) d'hydrogène carburant liquide, selon la revendication 7, comprenant en outre la détection d'H2 par des capteurs à fibres optiques placés à l'intérieur de la chambre intermédiaire (4) et/ou à l'extérieur du réservoir (1) et intégrés au réseau.

9. Procédé de contrôle de l'intégrité structurale d'un réservoir cryogénique composite (1) d'hydrogène carburant liquide, selon l'une quelconque des revendications 7 ou 8, comprenant en outre la détection d'O2 par des capteurs à fibres optiques placés à l'intérieur de la chambre intermédiaire (4) et intégrés au réseau.

10. Procédé de surveillance de l'intégrité structurale d'un réservoir cryogénique composite (1) d'hydrogène carburant liquide, selon l'une quelconque des revendications 7 à 9, comprenant en outre la mesure en continu de modes de vibration par différents accéléromètres à capteur à fibre optique en différents emplacements du réservoir (1) intégrés au réseau.

11. Procédé de surveillance de l'intégrité structurale d'un réservoir cryogénique composite (1) d'hydrogène carburant liquide, selon l'une quelconque des revendications 7 à 10, l'échantillon incorporant une caméra d'inspection par tomographie pour étudier simultanément l'évolution de fissures.
